## Europäisches Patentamt

## European Patent Office

## Office européen des brevets

(11) Veröffentlichungsnummer: **0 304 397**
**A1**

# (12) EUROPÄISCHE PATENTANMELDUNG

(21) Anmeldenummer: **88810540.0**

(22) Anmeldetag: **09.08.88**

(51) Int. Cl.⁴: **F 16 C 19/52**
**F 16 C 29/04**

(30) Priorität: **17.08.87 CH 3161/87**

(43) Veröffentlichungstag der Anmeldung:
**22.02.89 Patentblatt 89/08**

(84) Benannte Vertragsstaaten: **DE FR GB IT SE**

(71) Anmelder: **KERN & CO. AG**
**CH-5001 Aarau (CH)**

(72) Erfinder: **Hoffmann, Dieter**
**Gartenweg 2**
**CH-5033 Buchs (CH)**

(74) Vertreter: **Seeger, Jan**
**c/o Kern & Co. AG**
**CH-5001 Aarau (CH)**

(54) **Präzisionslager.**

(57) Bei einem Kugel- oder Rollenlager werden bleibende Deformationen der Rollen und Laufbahnen infolge von Stössen dadurch vermieden, dass die gegeneinander beweglichen Lagerteile (1, 2, 11, 12) Schultern (7, 17) aufweisen, die einander in so geringem Abstand (s, s') gegenüberstehen, dass sie bei Stössen aufeinander stossen und Schäden an den Rollelementen verhindern (Fig. 1).

Fig.1

EP 0 304 397 A1

Bundesdruckerei Berlin

## Beschreibung

### Präzisionslager

Die Erfindung betrifft ein Präzisionslager mit mehreren, mittels Rollelementen zueinander beweglich oder verschieblich geführten Teilen.

Lager, z.B. bei geodätischen Instrumenten, sind bei Transporten und im Messeinsatz Beschleunigungen oder Schlägen ausgesetzt, die Lagerbeschädigungen verursachen können. Zur Verminderung solcher Schäden sind verschiedene Massnahmen bekannt. Bei Kugellagern wird zwischen der Anzahl der Kugeln und deren Durchmesser ein Kompromiss angestrebt, ebenso bei der Festlegung der Härte der Kugeln und von deren Laufbahnen. Sind bereits Schäden entstanden, so wird bei Reparaturen von der Möglichkeit Gebrauch gemacht, durch Austausch des Kugelkäfigs neue Laufbahnen zu benutzen.

Auch sind Stossicherungen bei Lagern bekannt, bei denen man durch Federn, Rasten oder grosses Lagerspiel ein Ausweichen der Laufbahnen vor einem Stoss erreicht, damit keine Lagerteile beschädigt werden. Diese Sicherungen haben den Nachteil, dass die gelagerten Teile nach einem Stoss zu wenig genau in ihre Ursprungslage zurückkehren.

Aufgabe der Erfindung ist es, ein Präzisionslager anzugeben, dessen hochgenaue Führung auch bei Stossbelastung erhalten bleibt, dessen Führungselemente, wie Kugeln, Rollen, Laufbahnen jedoch vor bleibenden Deformationen geschützt sind.

Diese Aufgabe wird gemäss der Erfindung durch die Merkmale des Patentanspruchs 1 gelöst. Vorteilhafte Weiterbildungen sind Gegenstand der Unteransprüche.

Im Folgenden wird die Erfindung anhand einer, ein Ausführungsbeispiel darstellenden Zeichnung ausführlicher erläutert. Es zeigen in schematischer Darstellung

Fig. 1 einen Schnitt durch ein erfindungsgemässes Planlager und

Fig. 2 einen Schnitt durch ein erfindungsgemässes Radiallager.

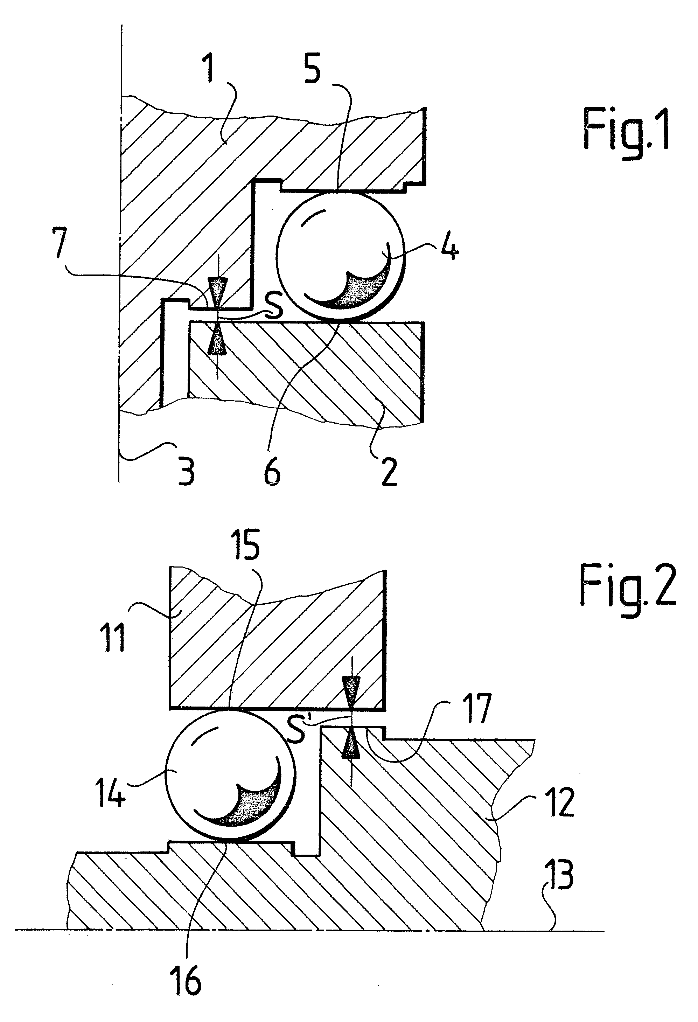

Das Planlager gemäss Fig. 1 umfasst zwei zueinander mittels Kugeln verschieblich gelagerte Teile 1 und 2 mit einer gemeinsamen Drehachse 3. Von den Kugeln ist nur eine Kugel 4 dargestellt, welche eine Laufbahn 5 des Teiles 1 gegen eine Laufbahn 6 des Teiles 2 abstützt. Am Teil 1 ist um die Achse 3 herum eine Schulter 7 ausgebildet, welche dem Teil 2 in einem geringen Abstand s von z.B. 0,1% des Durchmessers der Kugel 4 gegenübersteht.

Erhält das Teil 1 einen Stoss längs der Achse 3 in Richtung auf das Teil 2 hin, so werden sich die Kugeln 4 und deren Laufbahnen 5 und 6 elastisch deformieren bis die Schulter 7 auf das Teil 2 aufsetzt und damit eine bleibende Deformation verhindert. Nach erfolgtem Stoss verschwindet die elastische Deformation und das Teil 1 kann wieder reibungsfrei gegenüber dem Teil 2 abrollen.

Das Radiallager gemäss Fig. 2 umfasst zwei zueinander mittels Kugeln verschieblich gelagerte Teile 11 und 12 mit einer gemeinsamen Drehachse 13. Von den Kugeln ist nur eine Kugel 14 dargestellt, welche eine Laufbahn 15 des Teiles 11 gegen eine Laufbahn 16 des Teiles 12 abstützt. Am Teil 12 ist um die Achse 13 herum eine Schulter 17 ausgebildet, welche dem Teil 11 in einem geringen Abstand s' von z.B. 0,1% des Durchmessers der Kugel 14 gegenübersteht.

Erhält das Teil 11 einen Stoss senkrecht zur Achse 13 in Richtung auf das Teil 12 hin, so schützt die Schulter 17 die Rollelemente 14, 15, 16 in gleicher Weise, wie bereits zu Fig. 1 beschrieben.

Die Erfindung ist nicht auf die beschriebenen Kugellager beschränkt. Sie lässt sich auch bei Lagern mit anderen Rollelementen, wie Walzen, Nadeln, Konen, usw. verwenden. Auch können Sicherungen in mehreren, vorzugsweise zueinander senkrechten Richtungen miteinander am gleichen Lager kombiniert sein.

## Patentansprüche

1. Präzisionslager mit mehreren, mittels Rollelementen zueinander beweglich oder verschieblich geführten Teilen, dadurch gekennzeichnet, dass die zueinander beweglich geführten Teile (1, 2, 11, 12) Schultern (7, 17) mit hinreichender Oberflächenausdehnung aufweisen, welche einander in einem so geringen Abstand (s, s') gegenüberstehen, dass sie bei übermässigen Lagerbelastungen, z.B. bei Stössen einander berühren und eine bleibende Deformation der Rollelemente (4, 14) und oder von deren Rollbahnen (5, 6, 15, 16) verhindern.

2. Präzisionslager gemäss Anspruch 1, dadurch gekennzeichnet, dass die Rollelemente Kugeln (4, 14) sind.

3. Präzisionslager gemäss Anspruch 1, dadurch gekennzeichnet, dass die Rollelemente Walzen sind.

4. Präzisionslager gemäss Anspruch 1, dadurch gekennzeichnet, dass es ein Radiallager (Fig. 2) ist.

5. Präzisionslager gemäss Anspruch 1, dadurch gekennzeichnet, dass es ein Planlager (Fig. 1) ist.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 352 911 (OSPLACK) <br> * Insgesamt * <br> --- | 1-5 | F 16 C 19/52 <br> F 16 C 29/04 |
| X | DE-A-2 707 352 (KUGELFISCHER) <br> * Insgesamt * <br> ----- | 1-4 | |

RECHERCHIERTE SACHGEBIETE (Int. Cl.4)

F 16 C

Der vorliegende Recherchenbericht wurde für alle Patentansprüche erstellt

| Recherchenort | Abschlußdatum der Recherche | Prüfer |
|---|---|---|
| DEN HAAG | 16-11-1988 | ORTHLIEB CH.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
························································
& : Mitglied der gleichen Patentfamilie, übereinstimmendes Dokument

EPO FORM 1503 03.82 (P0403)